# EUROPÄISCHE PATENTSCHRIFT

(11) **EP 3 059 203 B1**
(45) Veröffentlichungstag und Bekanntmachung des Hinweises auf die Patenterteilung: **13.06.2018**
(21) Anmeldenummer: 16156438.0
(22) Anmeldetag: 19.02.2016
(51) Int. Cl.: B66F 9/08

(54) **HUBANORDNUNG EINES HUBWAGENS UND HUBWAGEN**
LIFTING ASSEMBLY OF A LIFT JACK AND LIFT JACK
DISPOSITIF ELEVATEUR D'UN CHARIOT ELEVATEUR ET CHARIOT ELEVATEUR

(30) Priorität: 20.02.2015 DE 102015102402
(43) Veröffentlichungstag der Anmeldung: 24.08.2016
(73) Patentinhaber: Jungheinrich Aktiengesellschaft, 22047 Hamburg (DE)
(72) Erfinder: Meloch, Piotr, 22558 Henstedt-Ulzburg (DE); Fischer, Kai, 22459 Hamburg (DE)
(74) Vertreter: Hauck Patentanwaltspartnerschaft mbB

(56) Entgegenhaltungen:
- JP-A- 2001 130 887
- JP-A- 2001 220 094
- JP-A- 2010 076 846

## Beschreibung

Die vorliegende Erfindung betrifft eine Hubanordnung eines Hubwagens mit einem Hubmast mit mindestens einem Mastrahmen und einem Lastteil sowie einem Hubantrieb mit mindestens einer den Mastrahmen anhebenden Hubkette, die über einen Anbindungspunkt am Mastrahmen befestigt und über einen Umlenkpunkt geführt ist.

Derartige Hubanordnungen sind bekannt und finden Anwendung bei Hubwagen, insbesondere Gabelstaplern.

Hubwagen bzw. Gabelstapler mit Hubanordnung verfügen über einen Hubmast, der es ermöglicht, Nutzlasten anzuheben und abzusenken. Die Hubmasten besitzen mehrere Mastrahmen, die ineinander gelagert und geführt sind, sowie einen Lastteil, der in der Regel mit Gabelzinken versehen ist. Durch die Verwendung von mehreren Mastrahmen wird ein besonders günstiges Verhältnis von Bauhöhe zu Hubhöhe erreicht. Vorzugsweise besitzen die Hubmasten zwei oder mehr Mastrahmen, wobei ein sehr häufig anzutreffender Hubmast aus drei Mastrahmen besteht, nämlich einem inneren Mastrahmen, einem mittleren Mastrahmen und einem äußeren Ständer. Ein solcher Hubmast wird als Dreifachmast bezeichnet. Anhand eines derartigen Dreifachmastes soll die Funktionsweise einer solchen Hubanordnung erläutert werden.

Die Mastrahmen werden mithilfe von Hubzylindern und Hubketten angetrieben, wodurch der Hubvorgang zustande kommt. Es hat sich gezeigt, dass eine derartige Kombination aus Hubzylindern und Hubketten die meisten Vorteile bietet. Bei einer Hubkette handelt es sich praktisch um ein Seil, weil diese nur Zugkräfte übertragen kann. Die Hubkette ist an beiden Enden mit Anbindungselementen an den entsprechenden Bauteilen befestigt, wobei es sich bei dem einen Bauteil um den zugehörigen Mastrahmen handelt. Zwischen den Anbindungspunkten werden die Hubketten in einem Umlenkpunkt mithilfe einer oder mehrerer Kettenrollen umgelenkt. Die Umlenkpunkte sind so gewählt, dass die Hubfunktion erfüllt wird. Üblicherweise bestehen derartige Hubketten aus metallischen Werkstoffen.

Bei einem Dreifachmast wird beispielsweise der mittlere Mastrahmen mit zwei Masthubzylindern angehoben, während der innere Mastrahmen mit zwei Masthubketten angehoben wird. Das Lastteil wird mithilfe eines Freihubzylinders und einer Freihubkette angehoben. Die Masthubketten sind am unteren Ende des inneren Mastrahmens in Anbindungspunkten befestigt. Sie werden am oberen Ende des mittleren Mastrahmens in Umlenkpunkten über Kettenrollen umgelenkt. Das andere Ende der Hubketten ist im äußeren Ständer an Anbindungspunkten befestigt.

Im Betrieb von derartigen Hubwagen bzw. Gabelstaplern werden die Hubketten beim Fahren aufgrund von Unebenheiten des Fahrgrundes zum Schwingen angeregt, wodurch sie gegen die anliegenden Bauteile, insbesondere den zughörigen Mastrahmen, schlagen können. Hierdurch entstehen unerwünschte Geräusche und Beschädigungen am Mastrahmen. Die Geräuschentwicklung durch die Ketten äußert sich in einzelnen, teilweise kurz hintereinander folgenden lauten Schlägen.

Aus der DE 198 55 202 B4 ist eine Mastanordnung für einen Hubwagen bekannt, die einen Träger zum Halten einer Lasthebeeinrichtung, einen Hubantrieb zum Anheben des Trägers mit einer mit dem Träger verbundenen Hubkette, einen Führungsmast, an dem der Träger geführt wird, und einen an dem Führungsmast angeordneten Schwingungsbegrenzer zum Begrenzen einer Schwingbewegung der Hubkette aufweist. Bei diesem Schwingungsbegrenzer handelt es sich um eine Art Führung der Hubkette, d.h. dass eine Relativbewegung zwischen Schwingungsbegrenzer und Hubkette stattfindet. Damit sich die Kette am Schwingungsbegrenzer vorbeibewegen kann, ist ein Abstand zwischen den Bauteilen erforderlich, wodurch die Kette auch im Überlappungsbereich zum Schwingungsbegrenzer nach wie vor schwingt. Der Schwingungsbegrenzer ist hierbei am Außenmast (Ständer) angebracht. Wie vorstehend erwähnt, führen daher die Hubkette und der Schwingungsbegrenzer eine Relativbewegung zueinander aus.

Aus Patent Abstracts of Japan JP 2010-076846 ist eine Vorrichtung gemäß dem Oberbegriff des Anspruchs 1 zur Schwingungsdämpfung einer Hubkette bekannt geworden, bei der die Hubkette über zwei Führungsrollen geführt ist, wobei sich eine gekrümmte Anlagefläche zwischen den beiden Führungsrollen befindet. Bei einem Verfahren der Hubanordnung bewegen sich stets die Führungsrollen und die gekrümmte Führungsfläche gemeinsam entlang der Hubanordnung.

Aus Patent Abstracts of Japan JP 2001-130887 ist eine Hubanordnung bekannt, bei der an einem Hubmast eine vorstehende Nase ausgebildet ist, die eine Hubkette derart auslenkt, dass die Hubkette in ihrem Bereich zwischen ihrem Anlenkpunkt und dem Vorsprung geneigt, von der Hubanordnung fort verläuft. Zwischen der stehenden Nase und dem Umlenkpunkt verläuft die Hubkette vertikal und parallel zum Hubrahmen.

Der vorliegenden Erfindung liegt die Aufgabe zugrunde, eine Hubanordnung der eingangs beschriebenen Art zu schaffen, deren Hubkette im Betrieb eine besonders niedrige Geräuschentwicklung aufweist.

Diese Aufgabe wird erfindungsgemäß bei einer Hubanordnung der angegebenen Art dadurch gelöst, dass am Mastrahmen zwischen Anbindungspunkt und Umlenkpunkt der Hubkette mindestens ein die Hubkette aus ihrer direkten Verbindungslinie zwischen Anbindungspunkt und Umlenkpunkt auslenkendes und mit einer Vorspannung beaufschlagendes nachgiebiges Bauteil angeordnet ist. Die direkte Verbindungslinie ergibt sich als gerade Linie zwischen Anbindungs- und Umlenkpunkt. Aus dieser direkten Verbindungslinie wird die Hubkette durch das Bauteil gedrückt und die Hubkette liegt unter Vorspannung an dem Bauteil an.

Mit der erfindungsgemäßen Lösung gelingt es, die Geräuschentwicklung in der Hubanordnung, die beim Fahren durch schlagende Hubketten entsteht, zu verringern. Erfindungsgemäß wird verhindert, dass die Hubketten gegen die Profile und anliegenden Bauteile schlagen. Durch das Verhindern des Schlagens der Ketten wird eine wesentliche Geräuschquelle eines Hubwagens bzw. Gabelstaplers eliminiert.

Das Ziel der Geräuschreduzierung wird erreicht, indem die Hubkette durch das vorgesehene Bauteil daran gehindert wird, im normalen Betrieb frei zu schwingen.

Das freie Schwingen der Hubkette wird dadurch verhindert, dass die Hubkette vorgespannt wird und die Schwinglänge der Hubkette verkürzt wird. Die Schwinglänge der Hubkette ist dabei einerseits die Länge der Hubkette zwischen Anschlagpunkt und Bauteil sowie zwischen Umlenkpunkt und Bauteil. Die Vorspannung und die Kürzung der Schwinglänge der Hubkette wird erreicht, indem die Hubkette aus der direkten Verbindungslinie zwischen dem Anbindungspunkt und dem Umlenkpunkt mit einem Bauteil ausgelenkt wird, das hier als Hubkettenstabilisator bezeichnet wird.

Der Hubkettenstabilisator ist an dem Mastrahmen befestigt, der durch die Hubkette angehoben wird, an dem auch die Hubkette selbst befestigt ist. Dadurch entsteht während des Hubvorganges keine Relativbewegung zwischen der Hubkette, dem Hubkettenstabilisator und dem Mastrahmen (alle Bauteile liegen aufeinander).

Die Auslenkung und Vorspannung der Kette bewirkt, dass die Hubkette erst herumschlagen kann, nachdem die Vorspannkraft überwunden worden ist. Dadurch wird erreicht, dass die Hubkette erst bei sehr großen Erschütterungen von ihren vorbestimmten Anlagepunkten abheben und gegen andere Bauteile schlagen kann. Hinzukommt, dass durch die Auslenkung der Hubkette diese nur zu einer Seite abheben kann. Die normalen, durch das Fahren des Hubwagens verursachten Erschütterungen reichen nicht aus, die Hubkette so stark anzuregen, dass sie gegen andere Bauteile schlagen kann.

Mit dem erfindungsgemäß vorgesehenen Hubkettenstabilisator wird somit eine Verkürzung der Schwinglänge der entsprechenden Hubkette erreicht, was zur Folge hat, dass die angeregte Kette eine höhere Frequenz besitzt. Bei höheren Frequenzen sind aber die Amplituden der entsprechenden Schwingungen kleiner, so dass aufgrund der kleineren Ausschläge (Amplituden) der Hubkette diese automatisch weniger (und auch weniger stark) gegen die anliegenden Bauteile schlägt.

Ohne den vorgesehenen Hubkettenstabilisator kann die Hubkette auf ihrer gesamten Länge zwischen dem Anbindungspunkt und dem Umlenkpunkt schwingen. Mit dem Hubkettenstabilisator wird diese Schwinglänge verkürzt. Unter der Verkürzung der Schwinglänge der Hubkette ist zu verstehen, dass die Hubkettenlänge zwischen dem Anbindungspunkt und dem Umlenkpunkt durch den Hubkettenstabilisator in zwei Abschnitte unterteilt wird. Somit ist jeder Teilabschnitt kürzer als die ursprüngliche Schwinglänge. Der eine Teilabschnitt liegt oberhalb und der andere Teilabschnitt unterhalb des Hubkettenstabilisators.

Der Hubkettenstabilisator ist erfindungsgemäß als nachgiebiges Bauteil ausgebildet. Die Nachgiebigkeit des Bauteils ist ausreichend gering, um die erwähnte Auslenkung zu bewirken, jedoch ausreichend groß ist, um den Bereich zwischen dem Umlenkpunkt der Hubkette und dem Mastrahmen passieren zu können. Der Hubkettenstabilisator ist nachgiebig, weil er während des Hubvorganges die Umlenkung der Hubkette (den Bereich zwischen dem Umlenkpunkt und dem Mastrahmen) passiert, wo der Hubkettenstabilisator zusammengequetscht wird. Das Bauteil passiert den Bereich zwischen dem Umlenkpunkt der Hubkette und dem Mastrahmen, wenn der Mastrahmen angehoben wird. Da dieser Bereich in der Regel nur etwas breiter als die Breite der Hubkette ist, ist das nachgiebige Bauteil, das breiter ausgebildet sein sollte als die Hubkette, um eine entsprechende Auslenkung derselben zu bewirken, so nachgiebig bzw. elastisch, dass es diesen engen Bereich zusammen mit der Hubkette passieren kann.

Die Erfindung ist nicht auf die Anordnung eines einzigen Bauteiles, d.h. eines einzigen Hubkettenstabilisators, beschränkt. Vielmehr können auch mehrere Hubkettenstabilisatoren vorgesehen sein, so dass die Hubkette in entsprechend viele Abschnitte unterteilt wird.

Der vorgesehene Hubkettenstabilisator befindet sich zwischen der Hubkette und dem Mastrahmen, der von der Hubkette angehoben wird. An diesem Mastrahmen ist der Hubkettenstabilisator angeordnet.

Vorzugsweise ist das Bauteil blockförmig ausgebildet. Es weist insbesondere eine Kontaktfläche auf, an der die Hubkette anliegt. Da sich das Bauteil zusammen mit dem zugehörigen Mastrahmen und der Hubkette bewegt, findet keine Relativbewegung zwischen dieser Kontaktfläche und der Hubkette statt, so dass im Wesentlichen kein Verschleiß entsteht.

Das nachgiebige Verhalten des nachgiebigen Bauteiles kann durch seine Form und/oder durch seinen Werkstoff erreicht werden. Die Nachgiebigkeit des Hubkettenstabilisators wird vorzugsweise dadurch erreicht, dass er aus einem elastischen Werkstoff besteht oder einen solchen enthält. Die Nachgiebigkeit kann aber auch ausschließlich durch die Form des Bauteiles oder in Kombination der Form mit dem Werkstoff erreicht werden. So sind beispielsweise Anlaufschrägen, Ausschnitte, Abrundungen, Hinterschneidungen etc. möglich.

Bei einer besonders bevorzugten Ausführungsform befindet sich das Bauteil im eingefahrenen Zustand des Mastrahmens etwa auf der halben Strecke zwischen Anbindungspunkt und Umlenkpunkt. Bei einem größeren Abstand zwischen den besagten Punkten der Hubkette werden vorzugsweise mehrere Hubkettenstabilisatoren verwendet. Hierbei ist die Einbauhöhe entsprechend zu wählen, beispielsweise in gleiche Abschnitte zu unterteilen.

In einer bevorzugten Ausgestaltung können auch zwei oder mehr nachgiebige Bauteile vorgesehen sein, um die Kette in mehreren Punkten auszulenken.

Die Dicke des Hubkettenstabilisators ist in jedem Fall so auszuwählen, dass die Hubkette vom Mastrahmen weggedrückt wird, wodurch die Kette von der direkten Verbindungslinie ausgelenkt wird.

In Weiterbildung der Erfindung kann das Bauteil eine Führung für die Hubkette bilden. Wie bereits erwähnt, findet keine Relativbewegung zwischen Hubkette und nachgiebigem Bauteil statt, so dass die Führung die Aufgabe hat, die Hubkette daran zu hindern, seitlich vom Hubkettenstabilisator abzuspringen. Hierzu besitzt das nachgiebige Bauteil, vorzugsweise neben einer Kontaktfläche für die Hubkette, seitlich davon angeordnete Borde (erhöhte Bereiche), die das seitliche Abspringen verhindern.

Bevorzugt ist das Bauteil mit dem Mastrahmen verklebt. Eine Verklebung hat den Vorteil, dass an dem Mastprofil keine mechanischen Befestigungsmittel untergebracht werden müssen. Aufgrund der Vorspannung auf das Bauteil durch die Hubkette bietet eine Verklebung auch ausreichend Halt.

Die Erfindung betrifft ferner einen Hubwagen, insbesondere Gabelstapler, der eine Hubanordnung mit den vorstehend beschriebenen Merkmalen aufweist.

Die Erfindung wird nachfolgend anhand eines Ausführungsbeispiels in Verbindung mit der Zeichnung im Einzelnen erläutert. Es zeigen:
- Fig. 1: eine räumliche Darstellung eines Hubmastes von schräg vorne mit eingefahrenen Mastrahmen;
- Fig. 2: eine räumliche Ansicht des Hubmastes von schräg hinten mit zwei ausgefahrenen Mast-rahmen;
- Fig. 3: eine vergrößerte Ansicht eines Teiles von Figur 2;
- Fig. 4: eine vergrößerte Teilseitenansicht des Hubmastes;
- Fig. 5: eine räumliche Darstellung einer Ausführungsform eines Hubkettenstabilisators;
- Fig. 6: eine Draufsicht auf den Hubkettenstabilisator der Figur 5, und
- Fig. 7: eine perspektivische Ansicht einer alternativen Ausgestaltung eines Hubkettenstabilisators.

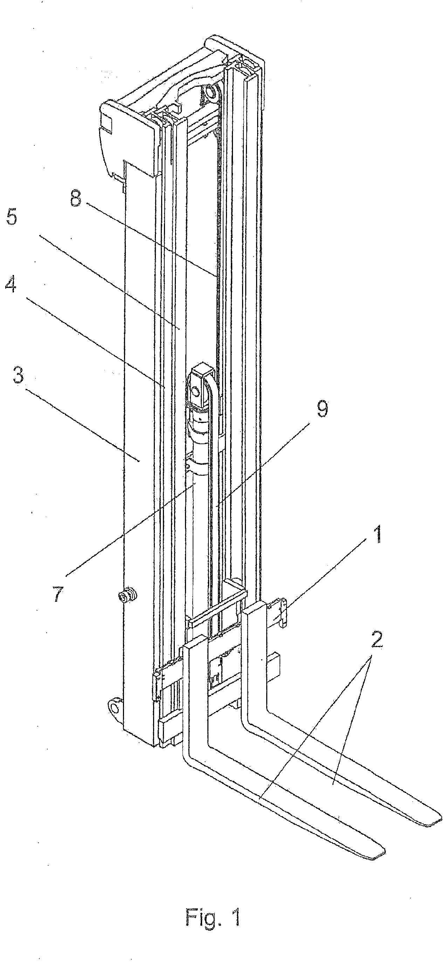

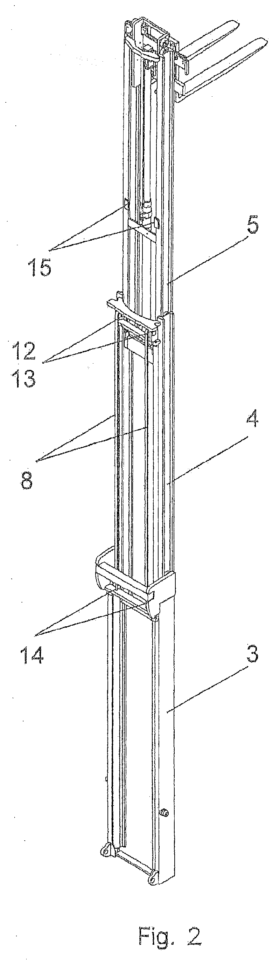

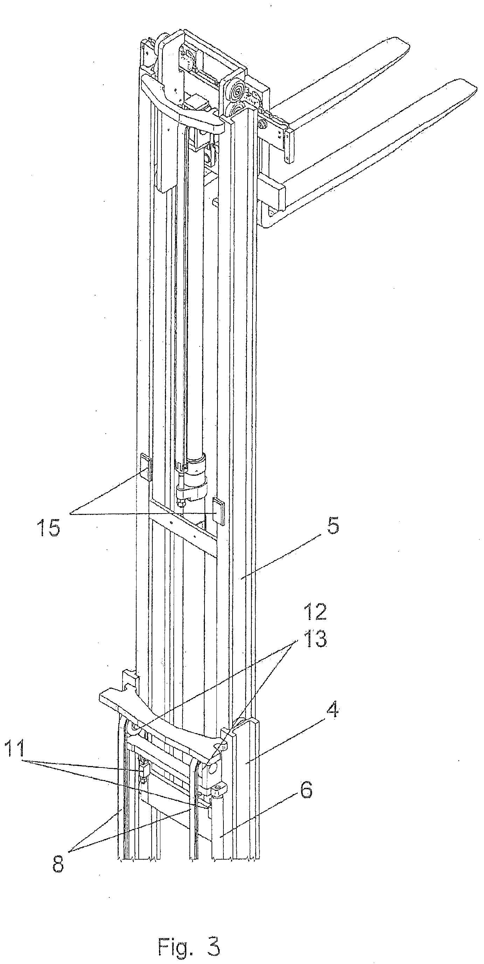

Der in Figur 1 dargestellte Hubmast einer Hubanordnung eines Gabelstaplers ist als Dreifachmast ausgebildet und besitzt einen mittleren Mastrahmen 4, der mit zwei Masthubzylindern 6 (in Figur 3 gezeigt) angehoben wird, einen inneren Mastrahmen 5, der mit zwei Masthubketten 8 angehoben wird, und einen äußeren Ständer 3. Die entsprechenden Mastrahmen sind ineinander gelagert und werden ineinander geführt. Ferner besitzt der Hubmast ein Lastteil 1 mit Gabelzinken 2, auf dem eine anzuhebende oder abzusenkende Nutzlast angeordnet wird. Das Lastteil 1 wird mithilfe eines Freihubzylinders 7 und einer Freihubkette 9 angehoben. Die Masthubketten 8 sind am unteren Ende des inneren Mastrahmens 5 in Anbindungspunkten 11 (siehe Figur 3) befestigt. Sie werden am oberen Ende des mittleren Mastrahmens 4 in Umlenkpunkten 12 über Kettenrollen 13 umgelenkt, wie in Figur 2 gezeigt. Das andere Ende der jeweiligen Hubkette 8 ist im Ständer 3 an einem Anbindungspunkt 14 befestigt, wie ebenfalls in Figur 2 gezeigt.

Figur 2 zeigt den Hubmast der Figur 1 im praktisch komplett ausgefahrenen Zustand, der seine maximale Hubhöhe erreicht hat. Man erkennt den am weitesten ausgefahrenen inneren Mastrahmen 5 mit den zugehörigen Hubketten 8 sowie den von Kettenrollen 13 gebildeten Umlenkpunkten 12 der Hubketten 8. Ebenfalls sind die Anbindungspunkte 14 der Hubketten 8 am Ständer 3 erkennbar.

Figur 3 zeigt eine vergrößerte Ansicht eines Teiles von Figur 2. Man erkennt, dass auf der Rückseite des inneren Mastrahmens 5, d.h. der beiden Doppel-T-Profile desselben, zwei Hubkettenstabilisatoren 15 angeordnet sind. Hierbei handelt es sich jeweils um ein nachgiebiges bzw. elastisches Bauteil, das blockförmig oder plattenförmig ausgebildet ist.

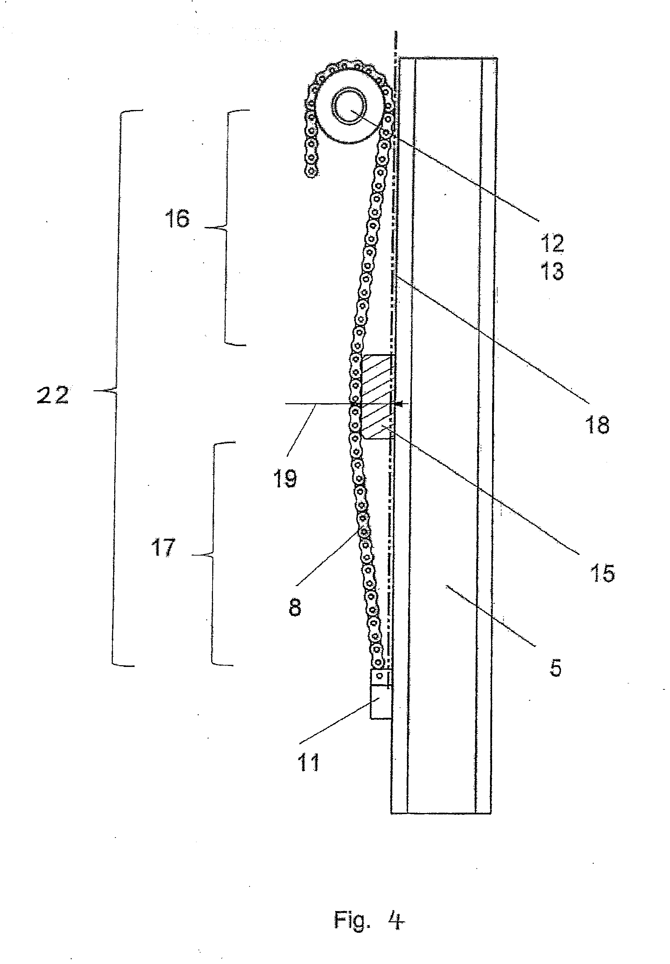

In der vergrößerten Teilseitenansicht der Figur 4 ist ein Hubkettenstabilisator 15 in vergrößertem Maßstab dargestellt. In dieser Darstellung befindet sich der innere Mastrahmen im eingefahrenen Zustand, so dass der Hubkettenstabilisator 15 die entsprechende Hubkette 8 kontaktiert. Mit dem Hubkettenstabilisator 15 wird die Hubkette 8 von ihrer direkten Verbindungslinie 18 zwischen ihrem Anbindungspunkt 11 und ihrem Umlenkpunkt 12 ausgelenkt, wie bei 19 gezeigt. Der Hubkettenstabilisator 15 befindet sich zwischen der Hubkette und dem inneren Mastrahmen 5, der von der Hubkette 8 angehoben wird. Er ist ungefähr auf der halben Strecke zwischen dem Umlenkpunkt 12 und dem Anbindungspunkt 11 angeordnet. Er hat eine solche Dicke, dass die Hubkette 8 vom inneren Mastrahmen weggedrückt wird. Hierdurch wird die Hubkette 8 daran gehindert, im normalen Staplerbetrieb frei zu schwingen. Dies wird dadurch erreicht, dass die Hubkette vorgespannt wird und die Schwinglänge der Hubkette verkürzt wird. Auf diese Weise wird eine Geräuschreduzierung erreicht, da die Tendenz der Hubkette, gegen benachbarte Bauteile zu schlagen, verringert wird.

Der Hubkettenstabilisator 15 ist als nachgiebiges bzw. elastisches Bauteil ausgebildet, da er während eines Hubvorganges zusammen mit der Hubkette 8 die Umlenkung 12, d.h. den Spalt zwischen der Umlenkung 12 und dem Mastrahmen 5, passiert, wobei er gestaucht wird (annähernd um den Betrag der Auslenkung 19 der Hubkette 8).

In Figur 4 ist mit 22 der Abstand zwischen dem Anbindungspunkt 11 und dem Umlenkpunkt 12 der Hubkette 8 dargestellt. Diese Strecke wird durch den Hubkettenstabilisator 15 in zwei Abschnitte 16, 17 unterteilt, wodurch die Schwingungslänge der Hubkette halbiert wird.

Da keine Relativbewegung zwischen Hubkette 8 und Hubkettenstabilisator 15 stattfindet, findet auch kein Abrieb an der Kontaktfläche des Hubkettenstabilisators mit der Hubkette statt.

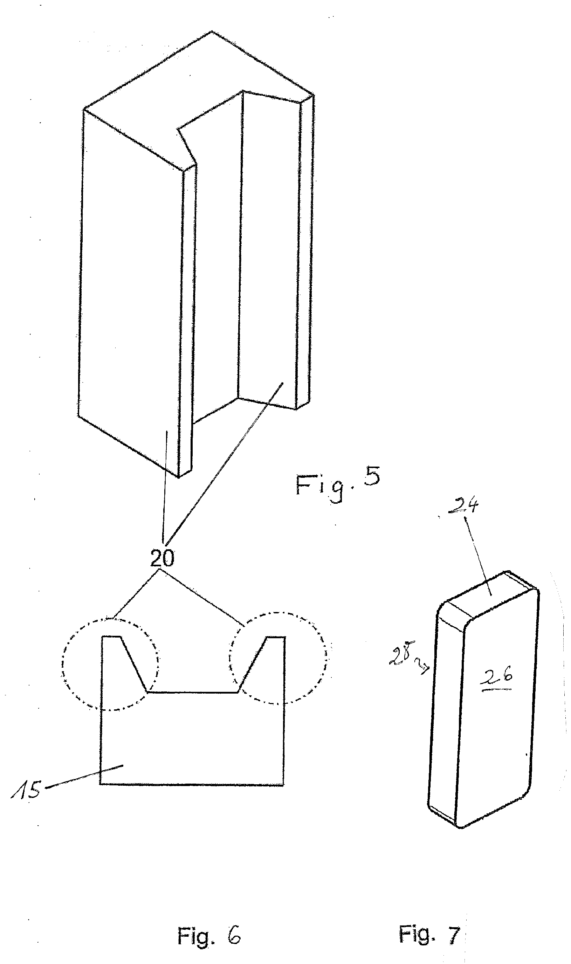

Die Figuren 5 und 6 zeigen eine besondere Ausführungsform eines Hubkettenstabilisators, der mit einer seitlichen Führung für die Hubkette versehen ist. Diese seitliche Führung wird durch zwei Borde 20 gebildet, die die Hubkette 8 zwischen sich aufnehmen. Die in Figur 6 in der Draufsicht gezeigten Borde 20 verhindern ein seitliches Abspringen der Hubkette vom Hubkettenstabilisator.

Fig. 7 zeigt eine alternative Ausgestaltung eines Hubkettenstabilisators 24 in einer perspektivischen Ansicht. Der Hubkettenstabilisator 24 besitzt eine quaderförmige Kontur, deren eine Flachseite 26 als Anlagefläche für die Hubkette dient und dessen gegenüberliegende Flachseite 28 als Klebefläche zur Befestigung an dem Hubmast dient.

## Patentansprüche

1. Hubanordnung eines Hubwagens mit einem Hubmast mit mehreren ineinander gelagerten und geführten Mastrahmen und einem Lastteil sowie einem Hubantrieb mit mindestens einer Hubkette (8), die über einen Anbindungspunkt (11) an einem inneren Mastrahmen (5) befestigt und über einen Umlenkpunkt (12) an einem mittleren Mastrahmen (4) geführt ist, wobei an dem inneren Mastrahmen (5) mindestens ein die Hubkette (8) aus ihrer direkten Verbindungslinie (18) zwischen Anbindungspunkt (11) und Umlenkpunkt (12) auslenkendes und mit einer Vorspannung beaufschlagendes Bauteil (15) angeordnet ist, **dadurch gekennzeichnet, dass** das Bauteil eine Nachgiebigkeit aufweist, die ausreichend gering ist, um die Auslenkung und Vorspannung der Hubkette (8) zu bewirken, jedoch ausreichend groß ist, um den Bereich zwischen dem Umlenkpunkt (12) der Hubkette (8) und dem inneren Mastrahmen (5) passieren zu können.

2. Hubanordnung nach Anspruch 1, **dadurch gekennzeichnet, dass** das nachgiebige Bauteil blockförmig ausgebildet ist.

3. Hubanordnung nach Anspruch 1 oder 2, **dadurch gekennzeichnet, dass** sich das nachgiebige Bauteil (15) im eingefahrenen Zustand des Mastrahmens (5) etwa auf der halben Strecke zwischen Anbindungspunkt (11) und Umlenkpunkt (12) befindet.

4. Hubanordnung nach einem der Ansprüche 1 bis 3, **dadurch gekennzeichnet, dass** zwei oder mehr nachgiebige Bauteile (15) vorgesehen sind.

5. Hubanordnung nach einem der vorangehenden Ansprüche, **dadurch gekennzeichnet, dass** das nachgiebige Verhalten des nachgiebigen Bauteiles durch seine Form und/oder seinen Werkstoff erreicht wird.

6. Hubanordnung nach einem der vorangehenden Ansprüche, **dadurch gekennzeichnet, dass** das nachgiebige Bauteil eine Führung für die Hubkette (8) bildet.

7. Hubanordnung nach Anspruch 6, **dadurch gekennzeichnet, dass** das nachgiebige Bauteil eine Kontaktfläche für die Hubkette (8) und zwei seitlich davon angeordnete Borde (20) aufweist.

8. Hubanordnung nach einem der Ansprüche 1 bis 7, **dadurch gekennzeichnet, dass** das nachgiebige Bauteil mit dem Mastrahmen verklebt ist.

9. Hubwagen, **dadurch gekennzeichnet, dass** er eine Hubanordnung nach einem der vorangehenden Ansprüche aufweist.

## Claims

1. A lifting assembly of a lifting jack with a lifting mast having a plurality of mast frames which are mounted and guided in each other, and a load part, as well as a lift drive having at least one lifting chain (8) that is attached to an inner mast frame (5) via a connecting point (11) and is guided via a deflection point (12) on a middle mast frame (4), wherein at least one component (15) that deflects the lifting chain (8) out of its direct connecting line (18) between the connecting point (11) and the deflecting point (12) and that applies initial tension on the lifting chain (8) is arranged on the inner mast frame (5), **characterized in that** the component has a compliance that is sufficiently low enough to realize the deflection and initial stress, but sufficiently large enough to be able to pass through the area between the deflection point (12) of the lifting chain (8) and the inner mast frame (5).

2. The lifting assembly according to claim 1, **characterized in that** the compliant component is designed in the shape of a block.

3. The lifting assembly according to claim 1 or 2, **characterized in that** the compliant component (15) is located at approximately half the distance between the connecting point (11) and the deflection point (12) when the mast frame (5) is in a retracted state.

4. The lifting assembly according to one of claims 1 to 3, **characterized in that** two or more compliant components (15) are provided.

5. The lifting assembly according to one of the preceding claims, **characterized in that** the compliant behavior of the compliant component is achieved by its shape and/or its material.

6. The lifting assembly according to one of the preceding claims, **characterized in that** the compliant component forms a guide for the lifting chain (8).

7. The lifting assembly according to claim 6, **characterized in that** the compliant component has a contact surface for the lifting chain (8) and two edges (20) arranged on the side thereof.

8. The lifting assembly according to one of claims 1 to 7, **characterized in that** the compliant component is adhered to the mast frame.

9. A lifting jack, **characterized in that** it has a lifting assembly according to one of the preceding claims.

## Revendications

1. Dispositif élévateur d'un chariot élévateur avec un mât élévateur comprenant plusieurs cadres de mât montés et guidés les uns dans les autres, et avec un élément de charge ainsi qu'un entraînement de levage comprenant au moins une chaîne de levage (8) fixée à un cadre de mât intérieur (5) par le biais d'un point d'attache (11) et guidée sur un cadre de mât du milieu (4) par le biais d'un point de déviation (12), dans lequel au moins un composant (15) faisant dévier la chaîne de levage (8) hors de sa ligne de liaison directe (18) entre le point d'attache (11) et le point de déviation (12) et exerçant une précontrainte sur celle-ci est disposé sur le cadre de mât intérieur (5), **caractérisé en ce que** le composant présente une élasticité suffisamment faible pour provoquer la déviation et la précontrainte de la chaîne de levage (8), mais suffisamment élevée pour pouvoir passer par la région entre le point de déviation (12) de la chaîne de levage (8) et le cadre de mât intérieur (5).

2. Dispositif élévateur selon la revendication 1, **caractérisé en ce que** le composant élastique est conçu en forme de bloc.

3. Dispositif élévateur selon la revendication 1 ou 2, **caractérisé en ce que** le composant élastique (15) dans l'état rentré du cadre de mât (5) se trouve approximativement à mi-chemin entre le point d'attache (11) et le point de déviation (12).

4. Dispositif élévateur selon l'une des revendications 1 à 3, **caractérisé en ce qu'**il est prévu deux composants élastiques (15) ou plus.

5. Dispositif élévateur selon l'une des revendications précédentes, **caractérisé en ce que** le comportement élastique du composant élastique est obtenu par sa forme et/ou son matériau.

6. Dispositif élévateur selon l'une des revendications précédentes, **caractérisé en ce que** le composant élastique forme un guidage pour la chaîne de levage (8).

7. Dispositif élévateur selon la revendication 6, **caractérisé en ce que** le composant élastique présente une surface de contact pour la chaîne de levage (8) et deux bords (20) disposés latéralement par rapport à celle-ci.

8. Dispositif élévateur selon l'une des revendications 1 à 7, **caractérisé en ce que** le composant élastique est collé avec le cadre de mât.

9. Chariot élévateur, **caractérisé en ce que** celui-ci présente un dispositif élévateur selon l'une des revendications précédentes.
